Europäisches Patentamt

European Patent Office

Office européen des brevets

(11) Veröffentlichungsnummer: **0 494 341 A1**

## EUROPÄISCHE PATENTANMELDUNG

(21) Anmeldenummer: **91115105.8**

(22) Anmeldetag: **06.09.91**

(51) Int. Cl.5: **F16H 29/06, B62M 9/08**

(30) Priorität: **21.12.90 DE 4041334**

(43) Veröffentlichungstag der Anmeldung:
**15.07.92 Patentblatt 92/29**

(84) Benannte Vertragsstaaten:
**CH DE FR GB IT LI**

(71) Anmelder: **LOOK S.A.**
**Rue de la Pique B.P. 72**
**F-58004 Nevers Cédex(FR)**

(72) Erfinder: **Mercat, Jean-Pierre**

24 Rue Gambetta
F-37110 Chateau-Renault(FR)
Erfinder: **Bontemps, Daniel**
**Rue de la Raie, 4 Impasse Mohler**
**F-58000 Nevers(FR)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

(54) **Getriebe mit regelbarem Übersetzungsverhältnis, insbesondere für Fahrräder.**

(57) Es wird ein Getriebe mit stufenlos regelbarem Übersetzungsverhältnis beschrieben. Das Getriebe besteht aus einer ersten und einer zweiten drehbaren Welle (10,22), die in einer Linie liegen, einem dazwischen angeordneten Halter (34), der ein Organ mit verstellbarer Exzentrizität trägt, mindestens zwei Übertragungsarmen (40), die an dem Organ (38) mit verstellbarer Exzentrizität angelenkt sind und mit der ersten Welle (16,10) über Gleitelemente (20) mit Einwegsperrung zusammenwirken, sowie mindestens zwei Übertragungsarmen (28), die an dem Organ (26) mit verstellbarer Exzentrizität angelenkt sind und über Gleitelemente (30) mit Einwegsperrung mit der zweiten Welle (42,22) zusammenwirken. Dabei ist der Halter (34) um die Achse der ersten und der zweiten Welle drehbar montiert und bildet ein Eingangsorgan, wobei eine der beiden Wellen (22) bezüglich Drehung an einem Gestell blockiert ist und die anderen Welle (10) ein Ausgangsorgan mit einer vom Eingangsorgan verschiedenen Bewegung bildet.

Fig. 2

Die Erfindung betrifft ein Getriebe mit regelbarem Übersetzungsverhältnis, insbesondere für Fahrräder, die durch den Menschen oder durch einen Motor angetrieben werden.

Die meisten Fahrräder oder Fahrzeuge besitzen zwischen einem drehbaren Antriebsorgan und der anzutreibenden Welle des Rades oder der Räder ein Getriebe, mit dem durch Steuerung von außen verschiedene Übersetzungsverhältnisse hergestellt werden können. Im allgemeinen verfügen diese Getriebe über eine begrenzte Anzahl von Übersetzungsverhältnissen mit diskreten Werten, die im allgemeinen progressiv gestuft sind.

Es sind auch bereits Getriebe mit regelbarem Übersetzungsverhältnis bekannt, die die Herstellung jedes gewünschten Übersetzungsverhältnisses in einem bestimmten Bereich gestatten, wobei die Änderung des Übersetzungsverhältnisses kontinuierlich vor sich geht.

Insbesondere sind Vorrichtungen bekannt, die ein Organ mit verstellbarer Exzentrizität, das zwischen einer drehbaren Eingangswelle und einer drehbaren Ausgangswelle angeordnet ist, und Antriebsarmgruppen besitzt, die zwischen dem Organ mit verstellbarer Exzentrizität und der Eingangswelle und der Ausgangswelle angeordnet und mit Elementen mit Einwegsperrung versehen sind, wie es beispielsweise in der Patentschrift FR 567 857 oder in der europäischen Patentanmeldung EP 89 114 383 beschrieben wird.

Das Übersetzungsverhältnis ändert sich bei diesen Vorrichtungen in Abhängigkeit von der Exzentrizität des Organs mit verstellbarer Exzentrizität in einem Bereich, der zwischen 1:1 und einem Maximumwert liegt, der von den Abmessungen der einzelnen Bauteile der Vorrichtung abhängig ist. Dieser Maximumwert ist selten größer als 3:1.

Der Regelbereich ist also einerseits begrenzt, was manche Anwendungen ausschließt, bei denen ein größerer Bereich, beispielsweise von 1:1 bis 6:1 gewünscht wird. Andererseits ist die Ausgangsgeschwindigkeit nie kleiner als die Eingangsgeschwindigkeit, so daß eine Untersetzungsstufe eingebaut werden muß, wenn die Ausgangsgeschwindigkeit kleiner als die Eingangsgeschwindigkeit sein soll. Ferner ist das Übersetzungsverhältnis nicht konstant, sondern unterliegt periodischen pulsierenden Schwankungen, die man zu verringern sucht, indem man beispielsweise die maximale Exzentrizität des Exzenterorgans verringert oder eine größere Anzahl von Übertragungsarmen vorsieht. Im ersten Fall wird jedoch der Regelbereich kleiner, und im zweiten Fall wird die Vorrichtung komplizierter und aufwendiger.

Ziel der Erfindung ist es, eine Vorrichtung dieser Art zu schaffen, mit der eine Ausgangsgeschwindigkeit erzeugt werden kann, die kleiner als die Eingangsgeschwindigkeit ist, und bei der das Übersetzungsverhältnis in einem größeren Bereich geändert werden kann, ohne daß die periodischen Schwankungen des Übersetzungsverhältnisses verstärkt werden.

Erfindungsgemäß wird dies mit Hilfe einer Vorrichtung gemäß Anspruch 1 erreicht.

Bevorzugte Ausführungsformen der Erfindung sind in den Unteransprüchen angegeben.

Weitere Einzelheiten und Vorteile der Erfindung ergeben sich aus der folgenden Beschreibung von Ausführungsbeispielen, wobei auf die beiliegende Zeichnung Bezug genommen wird. Es zeigen:

| | |
|---|---|
| Fig. 1 | eine schematische Darstellung eines bekannten Getriebes mit veränderlichem Übersetzungsverhältnis, |
| Fig. 2 | eine der Fig. 1 entsprechende schematische Darstellung eines erfindungsgemäßen Getriebes, |
| Fig. 3 | einen Längsschnitt durch eine erste Ausführungsform der Erfindung, |
| Fig. 4 | einen Querschnitt nach der Linie 4-4 von Fig. 3, der eine erste Ausführungsform der Exzentersteuerung zeigt, |
| Fig. 5 | einen Längsschnitt nach der Linie 5-5 von Fig. 4 durch eine Einzelheit der Exzentersteuerung, |
| Fig.6a und 6b | Darstellungen von Einzelheiten der Gleitelemente mit Einwegsperrung des Getriebes der Fig. 3-5, |
| Fig. 7 | einen Längsschnitt durch eine zweite Ausführungsform mit einer anderen Exzentersteuerung, |
| Fig. 8 und 9 | den Fig. 4 und 5 entsprechende Darstellungen, die die Einzelheiten der Exzentersteuerung der Ausführungsform von Fig. 7 zeigen, und |
| Fig.10 | eine Fig. 2 entsprechende schematische Darstellung einer Abwandlung der Erfindung. |

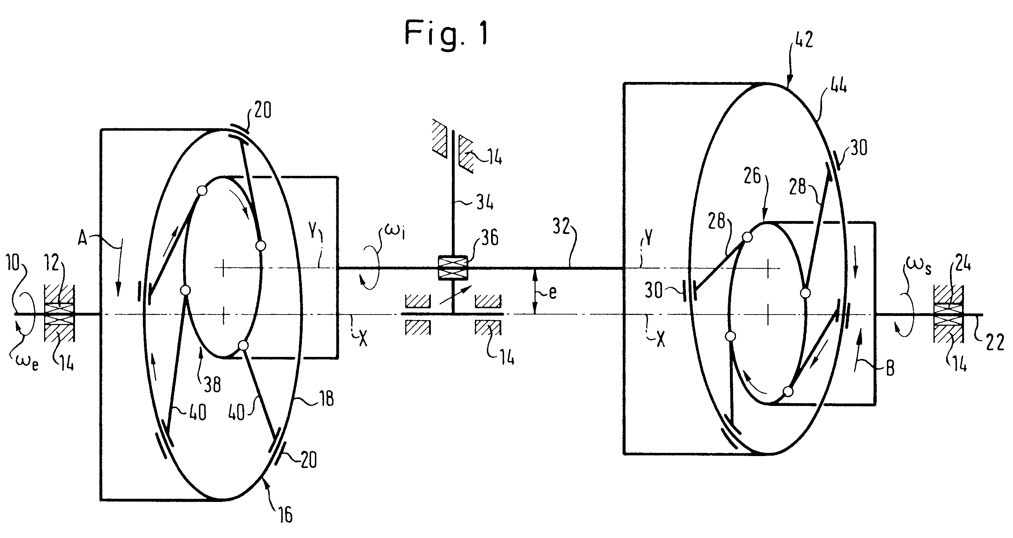

Fig. 1 zeigt ein Getriebe mit stufenlos regelbarem Übersetzungsverhältnis, wie es beispielsweise aus der FR-A-567 857 bekannt ist. Dieses Getriebe besitzt eine erste Welle oder Eingangswelle 10, die sich um eine Achse XX in einem an einem Gestell oder Rahmen 14 montierten Lager 12 dreht. Die Eingangswelle 10 trägt einen Außenring 16, der eine Bahn 18 für die Gleitelemente 20 besitzt, die im nachstehenden noch ausführlich beschrieben werden. Eine zweite Welle oder Ausgangswelle 22 liegt mit der Eingangswelle 10 in einer Linie und dreht sich in einem an dem Gestell 14 montierten Lager 24 um dieselbe Achse XX. Diese Ausgangswelle 22 trägt einen Innenring 26, an dem mehrere Arme 28 angelenkt sind, die an ihren anderen Enden Gleitelemente 30 tragen, die ebenfalls später noch beschrieben werden.

Zwischen den beiden Wellen 10 und 22 ist eine Zwischenwelle 32 vorgesehen. Diese ist an dem Rahmen 14 über einen Halter 34 und ein Lager 36 so montiert, daß sie sich um eine feste Achse YY drehen kann, die zur Achse XX parallel ist und in einem Abstand e von dieser angeordnet ist. Dieser Abstand kann kontinuierlich in einem Bereich U stufenlos mit Hilfe von nicht dargestellten Einrichtungen geregelt werden, die den Halter 34 gegen den Rahmen 14 bewegen.

An dem eingangsseitigen Ende der Zwischenwelle 32 ist ein Innenring 38 vorgesehen, an dem mehrere Arme 40 angelenkt sind, die an ihren anderen Enden Gleitelemente 20 tragen, die auf der Bahn 18 des Außenrings 16 der Eingangswelle 10 gleiten. An dem ausgangsseitigen Ende der Zwischenwelle 32 ist ein Außenring 42 vorgesehen, in dem eine Bahn 44 für die Gleitelemente 30 der Arme 28 vorgesehen ist, die an dem Innenring 26 der Ausgangswelle 22 angelenkt sind.

Die Gleitelemente 20 und 30 besitzen eine Einwegsperrung, d.h. sie können bezüglich ihrer jeweiligen Ringe 16, 42 nur in einer Richtung gleiten und sind in der anderen Richtung blockiert, so daß sie in dieser anderen Richtung von dem Außenring 16, 42 über die Arme 40, 28 auf den entsprechenden Innenring 38, 26 eine Bewegung und eine Kraft übertragen können. Wie mit den Pfeilen A und B angedeutet ist, verhindert die Sperrung ein Gleiten der Elemente 20 und 30 auf den Bahnen 18 und 44 entgegen dem Uhrzeigersinn (von der Eingangswelle 10 aus gesehen). Es sind zahlreiche Ausführungsformen solcher Gleitelemente mit Einwegsperrung bekannt, so daß sie hier nicht ausführlich beschrieben zu werden brauchen.

Zum Verständnis der Arbeitsweise dieses Getriebes wird zweckmäßigerweise auf die bereits genannte FR-A-567 857 verwiesen. Wenn die Eingangswelle 10 in eine Drehung $\omega_e$ im Uhrzeigersinn, was der Sperrung der Gleitelemente 20 entspricht, versetzt wird, so übertragen diese nacheinander die Bewegung des Außenrings 16 auf den Innenring 38 der Zwischenwelle 32, wobei deren Drehgeschwindigkeit $\omega_i$ im Verhältnis $r_1$ erhöht wird, das von den Abmessungen der einzelnen Bauteile und von dem Abstand e zwischen den Achsen XX und YY bzw. der Exzentrizität der Zwischenwelle abhängig ist. Am anderen Ende bewirkt die Drehung $\omega_i$ der Zwischenwelle, daß die Gleitelemente 30 nacheinander die Bewegung des Außenrings 42 auf den Innenring 26 der Ausgangswelle 22 übertragen, wobei deren Drehgeschwindigkeit $\omega_s$ im Verhältnis $r_2$ erhöht wird, das von den Abmessungen der einzelnen Bauteile und der Exzentrizität e der Zwischenwelle 32 abhängig ist. Das Gesamtübersetzungsverhältnis R ist somit gleich dem Produkt $r_1 \times r_2$ der Übersetzungsverhältnisse jeder Stufe, die jeweils aus einem Außenring 16, 42, einem Innenring 32, 26 und einer zugeordneten Armgruppe 40, 28 besteht. Dies wird durch die folgende Gleichung ausgedrückt:

$$\omega_s = \omega_i \times r_2 = \omega_e \times r_1 \times r_2 = \omega_e \times r \qquad (I)$$

Wenn die Exzentrizität also Null ist, sind die Übersetzungsverhältnisse $r_1$ und $r_2$ der beiden Stufen gleich 1 und das Gesamtübersetzungsverhältnis r ist also ebenfalls gleich 1, so daß sich der Regelbereich des Gesamtübersetzungsverhältnisses r von einem Minimumwert von 1 bis zu einem Maximumwert $r_M$ erstreckt, der größer als 1 ist und von den jeweiligen Abmessungen der einzelnen Bauteile abhängt. Dieser Maximumwert ist selten größer als 3.

Ferner ist bekannt, daß das Übersetzungsverhältnis $r_1$, $r_2$ jeder Stufe nicht konstant ist, sondern bei der Drehung pulsierenden Schwankungen unterliegt, die den Betrieb beeinträchtigen und für den Benutzer unangenehm sind. Bei der in Fig.1 gezeigten Ausführungsform ist die Winkelstellung der Gleitelemente 20 auf dem Außenring 16 der Eingangswelle 10 nicht an die Winkelstellung der Gleitelemente 30 auf dem Außenring 42 der Zwischenwelle 32 auf der Seite der Ausgangswelle gebunden, so daß sich die pulsierenden Schwankungen der beiden Stufen addieren können, was noch störender ist.

In der Patentanmeldung EP 89 114 383 wird dieser Nachteil teilweise dadurch beseitigt, daß in der zweiten Stufe der Innenring auf der Zwischenwelle und der Außenring auf der Ausgangswelle sitzt, so daß die Arme und die Gleitelemente der beiden Stufen immer dieselbe Winkelstellung zueinander haben. Diese Winkelstellung der Arme der beiden Stufen zueinander ist so gewählt, daß sich die pulsierenden Schwankungen der Übersetzungsverhältnisse $r_1$, $r_2$ der beiden Stufen wenigstens zu einem großen Teil gegenseitig kompensieren.

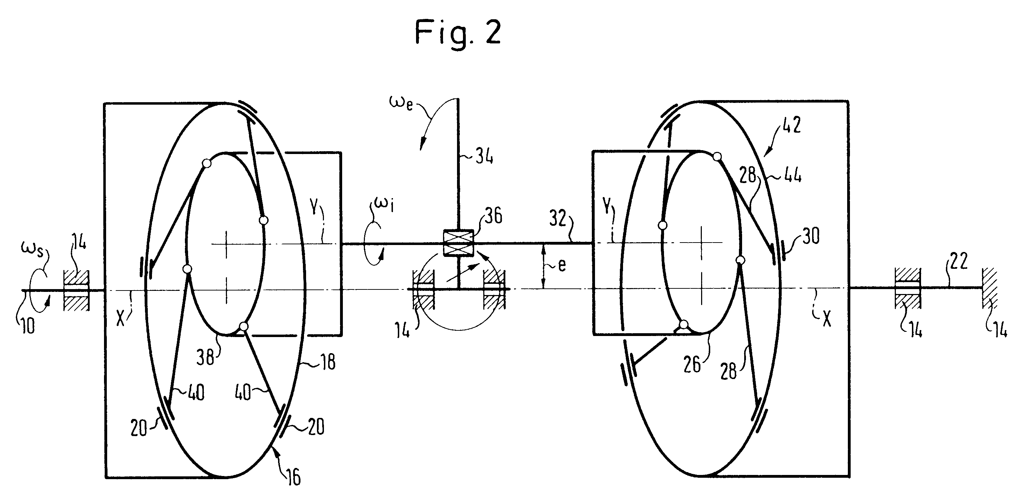

Fig. 2 zeigt ein erfindungsgemäßes Getriebe. Sein Aufbau entspricht im wesentlichen dem des beschriebenen Getriebes, und zwar mit der zuletztgenannten Verbesserung, d.h. der Innenring 26 der zweiten Stufe ist an der Zwischenwelle 32 und der Außenring 42 ist an der zweiten Welle 22 befestigt.

Erfindungsgemäß ist diese zweite Welle 22 starr mit dem Gestell 14 verbunden und kann sich infolgedessen nicht drehen. Außerdem ist der Halter 34 des Lagers 36 der Zwischenwelle 32 hierbei um die der ersten und der zweiten Welle 10, 22 gemeinsame Achse XX drehbar montiert und bildet ein Eingangsorgan. Die erste Welle 10 bildet ein Ausgangsorgan.

Daraus ergibt sich folgende Arbeitsweise: Wenn die Exzentrizität e Null ist, fällt die Achse YY der Zwischenwelle 32 mit der Achse XX der beiden Wellen 10 und 22 zusammen, und die Innenringe 26 und 38 bleiben - unabhängig von der Drehbewegung des Halters 34 - zu den Außenringen 16 und 42 konzentrisch. Da sich die Innenringe 26 und 38 nicht bewegen, behalten auch die Arme 40 und 28 ihre Stellung gegenüber den Innenringen 26, 38 und den Außenringen 42, 16 bei. Es findet also keine Bewegung des Außenrings 16 der ersten Welle 10 statt, und diese bleibt unbewegt.

Wenn die Exzentrizität nicht Null ist (Fig. 2), beschreibt das Lager 36 der Zwischenwelle 32 und damit die Achse YY eine Kreisbewegung mit dem Radius e um die Achse XX. Die Innenringe 26 und 38 der Zwischenwelle 32 beschreiben nun Planetenbewegungen um die Achse XX. Auf der Seite der zweiten, feststehenden Welle 22 bewirkt diese Planetenbewegung des Innenrings 26, daß die Arme 28 hin- und herschwingen. Infolge der Einwegsperrung der Gleitelemente 30 auf dem Außenring 42 bewirken diese Schwingbewegungen der Arme 28 nacheinander, daß der Innenring 26 um die Achse YY in Drehung versetzt wird, und diese Drehung $\omega_i$ überlagert sich der Planetenbewegung des Innenrings 26 um die Achse XX.

Dieselben Bewegungen finden an dem Innenring 38 auf der Seite der ersten Welle 10 statt. Sie bewirken ebenfalls Schwingbewegungen der Arme 40, und aufgrund der Einwegsperrung der Gleitelemente 20 versetzen diese den Außenring 16 und damit die erste Welle 10 oder Ausgangswelle in Drehung.

Wenn der Halter 34 sich mit einer Drehgeschwindigkeit $\omega_e$ dreht, dreht sich die erste Welle 10, was leicht zu beweisen ist, mit einer Drehgeschwindigkeit $\omega_s$, die mit der Geschwindigkeit $\omega_e$ durch die Beziehung:

$$\omega_s = \omega_e \times (r-1)/r = \omega_e \times R \qquad (II)$$

verbunden ist, in der r das Übersetzungsverhältnis der Vorrichtung von Fig. 1 ist. Zum Beweis genügt es, die Bewegungen des exzentrischen Halters 34 und der Eingangswelle oder ersten Welle 10 zu beschreiben, so wie sie sich von der Ausgangswelle oder zweiten Welle 22 der ersten Vorrichtung von Fig. 1 aus zeigen.

Zunächst stellt man fest, daß das Gesamtübersetzungsverhältnis R sich im Bereich von Null bis zu einem Maximumwert $R_M$ ändert, der gleich $(r_M - 1)/r_M$ und damit kleiner als 1 ist. Bei einem Wert von $r_M$ gleich 2,7 beträgt der Maximumwert $R_M$

beispielsweise 0,63. Es läßt sich nun im Prinzip jeder Regelbereich zwischen $\omega_s$ und $\omega_e$ herstellen, und zwar nötigenfalls mit Hilfe eines der ersten Welle 10 oder Ausgangswelle nachgeschalteten bekannten Übersetzungs- oder Untersetzungsgetriebes mit einem konstanten Übersetzungsverhältnis k, das die Ausgangsdrehbewegung $\omega_s$ in eine verwendbare Drehung $\omega_u$ umformt, die gleich k x $\omega_s$ ist.

Zweitens zeigt sich, daß die pulsierenden Schwankungen des Übersetzungsverhältnisses R schwächer sind als die des Übersetzungsverhältnissesr. Diese Schwankungen wirken sich nämlich in dem mathematischen Ausdruck (r-1)/r in derselben Richtung aus. Während beispielsweise die Schwankungen von r bei einer Vorrichtung gemäß Fig. 1 von Null bei r = 1 auf 10% bei r = $r_M$ = 2,7 ansteigen, steigen die Schwankungen von R bei der Vorrichtung von Fig. 2 von Null bei R = O auf 8% bei R = $R_M$ = 0,63.

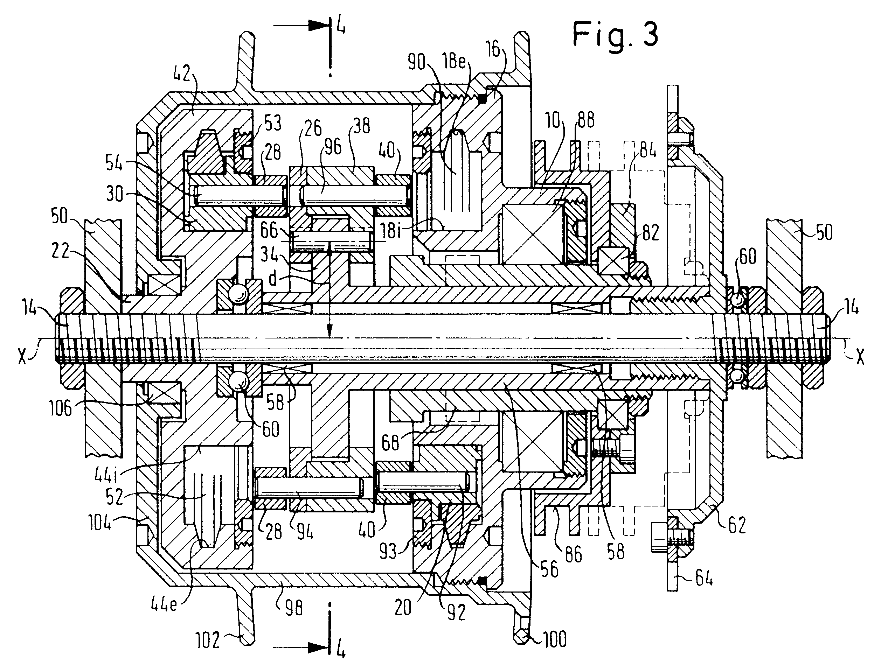

Die Fig. 3, 4 und 5 zeigen eine erste Ausführungsform einer erfindungsgemäßen Vorrichtung, die auf ein Fahrrad angewendet wird und in die Hinterradnabe integriert ist. In diesen Figuren sind Bauteile mit gleicher Funktion mit denselben Bezugszahlen wie in Fig. 2 versehen.

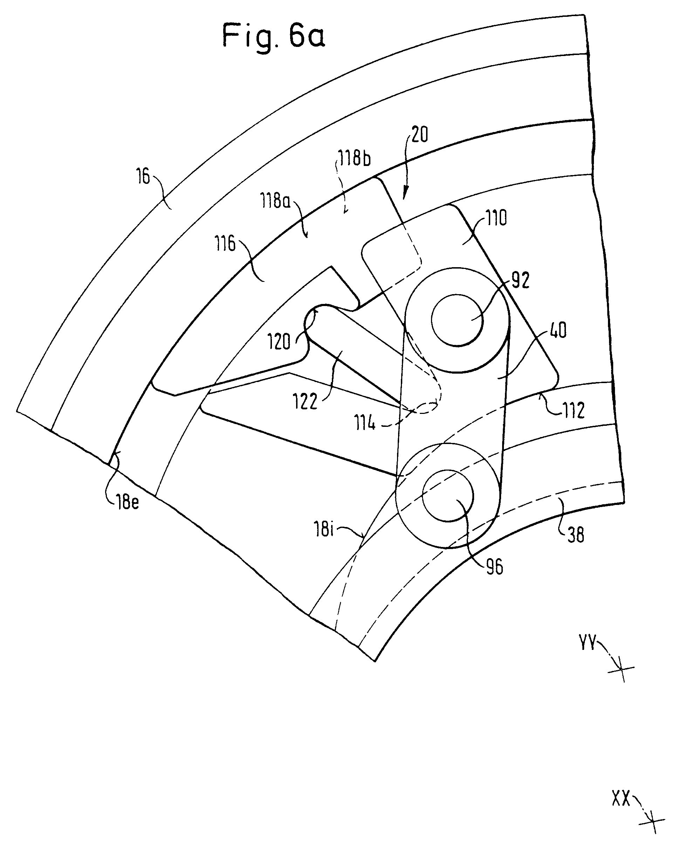

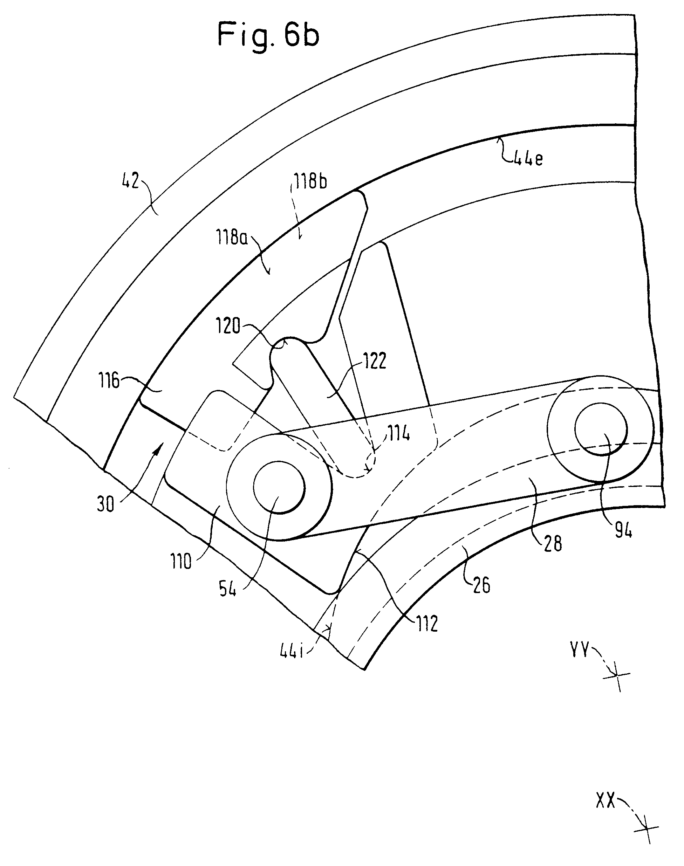

Das Gestell 14 besteht hier aus einer feststehenden Achse, die auf bekannte Weise an den Enden 50 der Schenkel der Hinterradgabel befestigt ist, von denen in Fig.3 nur diese Enden dargestellt sind. Die zweite Welle 22 hat die Form einer Buchse, die an einem Ende der Achse 14 durch Verschraubung befestigt ist. Der zugeordnete Außenring 42 ist mit der Buchse 22 aus einem Stück gebildet und besitzt eine Umfangsnut 52, die zur Achse XX der feststehenden Achse 14 konzentrisch und in axialer Richtung offen ist. Die Nut besitzt eine zylindrische Innenbahn 44i und eine Außenbahn 44e mit zwei einander entgegengesetzt kegelstumpfförmigen Flächen. Die Nut nimmt mehrere Gleitelemente 30 mit Einwegsperrung auf, deren Aufbau im nachstehenden anhand der Fig. 6a und 6b ausführlich beschrieben wird. Die Gleitelemente 30 tragen Achsen 54, an denen Arme 28 angelenkt sind. Sie werden in axialer Richtung durch einen an dem Außenring 42 befestigten Ring 53 gehalten.

Ein Halter 34 in Form einer sich quer zur Achse XX erstreckenden Platte ist mit einer Hülse 56 fest verbunden, die zwischen der Buchse 22 und dem anderen Ende der feststehenden Achse 14 auf dieser Achse über Radialwälzlager 58 und Axialwälzlager 60 drehbar montiert ist. Eine Scheibe 62 mit Außenverzahnung 64 ist am entgegengesetzten Ende der Hülse 56 angebracht und dient zur Aufnahme der Eingangsbewegung über eine Antriebskette, wie es bei Fahrrädern üblich ist.

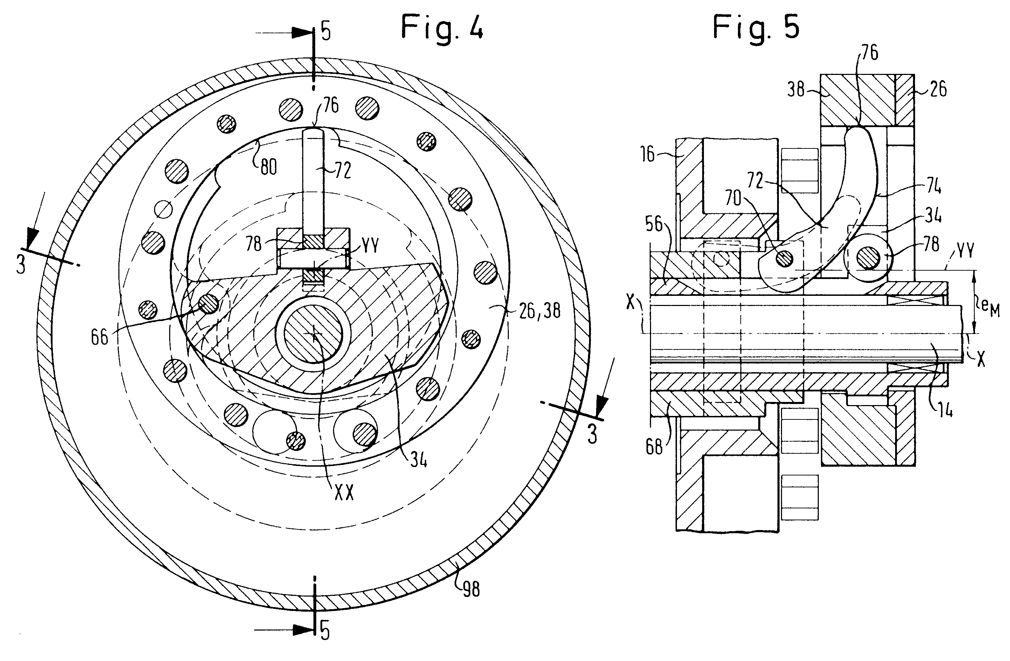

Zwei aneinanderliegende Innenringe 26, 38 sind auf dem Halter 34 um einen Zapfen 66 verschwenkbar montiert, der an diesem Halter parallel zur Achse XX und in einem Abstand d von dieser befestigt ist. Die beiden Innenringe 26, 38 definieren eine gemeinsame Achse YY, die in Fig.3 nicht dargestellt ist, jedoch in den Fig. 4 und 5 sichtbar ist. Diese Achse YY ist zur Achse XX parallel, und der Abstand e der Achsen XX und YY voneinander ändert sich in Abhängigkeit von der Verschwenkung um den Zapfen 66 von Null bis zu einem Maximumwert $e_M$. Zum besseren Verständnis der Figuren sei darauf hingewiesen, daß Fig. 4 ein Querschnitt nach der Linie 4-4 von Fig. 3 ist, der um etwa 90° gedreht ist, wie die Linie 3-3 zeigt, die die Längsschnittebene der Fig. 3 angibt.

Zum Verschwenken der beiden Innenringe 26, 38 um den Zapfen 66 und damit zur Änderung des Abstandes e ist der folgende Mechanismus vorgesehen: eine zylindrische Muffe 68 umgibt die Hülse 56 so, daß sie sich mit dieser drehen und auf ihr axial gleiten kann. Die Muffe 68 kann also zwischen einer ersten Endstellung, die von dem Halter entfernt und in Fig.3 mit unterbrochener Linie gezeichnet ist, und einer zweiten Endstellung, die dem Halter 34 nahe ist und in dieser Figur mit durchgehender Linie gezeichnet ist, jede mögliche Stellung einnehmen. An ihrem dem Halter 34 nahegelegenen Ende und in einer um die Achse XX um etwa 90° gegen den Zapfen 66 winkelmäßig versetzten Stellung (Fig.5) trägt die Muffe 68 eine Querachse 70, um die ein Daumen 72 schwenkbar ist, der seitlich mit einer konvexen Nockenfläche 74 versehen ist und an seinem Ende eine Schubnase 76 aufweist. Der Halter 34 trägt gegenüber dem Daumen 72 eine Rolle 78, auf der die Nockenfläche 74 des Daumens 72 abrollt, und die Innenringe 26, 38 besitzen gegenüber der Schubnase 76 des Daumens eine Auflagefläche 80.

Wenn die Muffe 68 in Fig. 3 ihre erste Stellung einnimmt, ist ihr Ende von dem Halter 34 entfernt, und der Daumen 72 (Fig. 5 in unterbrochener Linie gezeichnet) liegt mit dem Endbereich seiner Nockenfläche 74 auf der Rolle 78 auf und nimmt eine zur Muffe 68 in etwa parallele Stellung ein. Seine Nase 76 befindet sich hier im kleinsten Abstand von der Achse XX und hält die Innenringe 26, 38 in einer konzentrischen Stellung, in der ihre Achse YY mit der Achse XX zusammenfällt.

Wenn die Muffe 68 dagegen in Fig. 3 ihre zweite Stellung einnimmt, ist ihr Ende dem Halter 34 angenähert, und der Daumen 72 (in Fig. 5 mit durchgehender Linie gezeichnet) liegt mit dem Anfangsbereich seiner Nockenfläche 74 auf der Rolle 78 auf und nimmt eine zur Muffe 68 in etwa senkrechte Stellung ein. Seine Schubnase 76 befindet sich jetzt im größten Abstand von der Achse XX und hält die Innenringe 26, 38 in einer exzentrischen Stellung, in der ihre Achse YY in einem maximalen Abstand $e_M$ von der Achse XX angeordnet ist.

Die Buchse 68 kann natürlich jede Zwischenstellung einnehmen, so daß die Exzentrizität e der Innenringe 26, 38 jeden Wert zwischen Null und $e_M$ annehmen kann.

Wie Fig. 3 weiter zeigt, trägt die Muffe 68 an ihrem dem Halter 34 entgegengesetzten Ende ein Wälzlager 82, auf dem ein Ring 84 montiert ist, mit dessen Hilfe die Muffe 68 zwischen den oben beschriebenen Stellungen bewegt wird. Beispielsweise besitzt dieser Ring 84 eine radial offene Umfangsnut 86, in die ein nicht dargestelltes Steuerorgan eingreift, das den Ring 84 parallel zur Achse XX verschieben kann.

Die erste Welle hat die Form einer Buchse 10, die sich mit Hilfe eines Wälzlagers 88 um die Muffe 68 dreht. Der zugeordnete Außenring 16 ist mit der Buchse 10 einstückig ausgebildet und besitzt eine zur Achse XX der feststehenden Welle 14 konzentrische und in axialer Richtung offene Umfangsnut 90. In dieser Nut ist eine zylindrische Innenbahn 18i und eine Außenbahn 18e mit zwei einander entgegengesetzten kegelstumpfförmigen Flächen vorgesehen. Die Nut nimmt mehrere Gleitelemente 20 mit Einwegsperrung auf, deren Aufbau im nachstehenden anhand der Fig. 6a und 6b ausführlich beschrieben wird. Die Gleitelemente 20 tragen Achsen 92, an denen Arme 40 angelenkt sind. In axialer Richtung werden die Gleitelemente durch einen am Außenring 16 befestigten Ring 93 gehalten.

Die Arme 28 sind außerdem an Achsen 94 angelenkt, die die Innenringe 26, 38 auf der Seite des Außenrings 42 tragen. Ebenso sind die Arme 40 auch an Achsen 96 angelenkt, die von den beiden Innenringen 26, 38 auf der Seite des Außenrings 16 getragen werden. Die Arme 28 und die Arme 40 sind bezüglich den radialen Richtungen der Innenringe 26, 38 einander entgegengesetzt geneigt. Um die periodischen Schwankungen der Ausgangsbewegung zu verringern, sind die Achsen 94 und 96 in verschiedenen Abständen von der Achse YY angeordnet und sind die Winkelabstände zwischen jeder Achse 96 und den benachbarten Achsen 94 verschieden groß.

Die zylindrische Radnabe 98 besitzt auf an sich bekannte Weise seitliche Flansche 100, 102, die zur Montage der nicht dargestellten Speichen dienen und ist an dem Außenring 16 der ersten Welle 10 befestigt. Zur Erhöhung der mechanischen Festigkeit ist die Nabe 98 durch einen zur Achse XX senkrechten Boden 104 abgeschlossen, der über ein Wälzlager 106 auf der Buchse 22 der zweiten Welle sitzt.

Diese Ausführungsform arbeitet auf dieselbe Weise wie anhand von Fig. 2 beschrieben wurde. Die Zwischenwelle ist hier jedoch nur gedacht, da die beiden Innenringe 26 und 38 direkt aneinander befestigt sind.

Ergänzend sei lediglich erwähnt, daß die Resultierende der von den Armen 28 und 40 auf die Innenringe 26, 38 ausgeübten Kräfte unter allen Umständen ein Drehmoment erzeugt, das bestrebt ist, die Achse YY zur Achse XX zurückzuholen, so daß hierzu keine Rückholfeder vorgesehen werden muß.

Die Erfindung umfaßt außerdem eine zweckmäßige Ausbildung der Gleitelemente 20 und 30 mit Einwegsperrung. Wie die Fig.6a und 6b zeigen, besteht jedes Gleitelement aus den folgenden drei Teilen:

- einen Sockel 110 mit einer Unterseite 112 in Form eines Zylindersegments mit demselben Radius wie die Innenbahnen 44i und 18i und einer oberen halbzylindrischen Vertiefung 114; dieser Sockel 110 trägt die Achse 94 oder 96 der Arme 28 bzw. 40;
- einen oberen Schuh 116 mit zwei oberen Flächen 118a, 118b in Form von Kegelstumpfsegmenten mit demselben Radius und demselben Winkel wie die Außenbahnen 44e und 18e und einer unteren halbzylindrischen Vertiefung 120;
- einer Stange 122 mit zwei halbzylindrisch abgerundeten Enden; diese Stange 122 sitzt zwischen dem Sockel 110 und dem oberen Schuh 116 in den Vertiefungen 114 und 120, und ihre Länge ist so gewählt, daß sie, wenn der Sockel 110 mit der Innenbahn 44i oder 18i und der obere Schuh 116 mit den Außenbahnen 44e oder 18e in Kontakt ist, gegen die radiale Richtung in einem Winkel geneigt ist, der größer als der Reibungswinkel ist, damit ein Verklemmen des Sockels 110 und des Schuhs 116 an den jeweiligen Bahnen vermieden wird.

Dieser Aufbau des Gleitelements aus drei getrennten Teilen stellt in erster Linie eine Vereinfachung der Herstellung und der Bearbeitung dar. Wenn das Gleitelement einstückig wäre, müßte bei der Bearbeitung der oberen Flächen 118a, 118b des Schuhs 116 in Form von Kegelstumpfsegmenten darauf geachtet werden, daß sie zur unteren zylindersegmentförmigen Fläche 11 konzentrisch bleiben. Dies ist bei der erfindungsgemäßen Ausbildung nicht erforderlich. Zweitens können ein und dieselben Teile sowohl zur Bildung der den Armen 40 zugeordneten Gleitelemente 20 als auch der den Armen 28 zugeordneten Gleitelemente 30 verwendet werden. Hierzu ist lediglich die Montagerichtung des Sockels 110, des Schuhs 116 und der Stange 122 umzukehren. Drittens wird mit den kegelstumpfförmigen Bahnen 18e, 44e und den Schuhen mit Flächen 118a, 118b in Form von Kegelstumpfsegmenten eine größere Kontaktfläche und eine bessere Blockierung erreicht. Schließlich wird der Schuh 116 automatisch in axialer Richtung gehalten, so daß nur kleine Ringe 53, 93 für den axialen Halt des Sockels 116 vorzusehen sind.

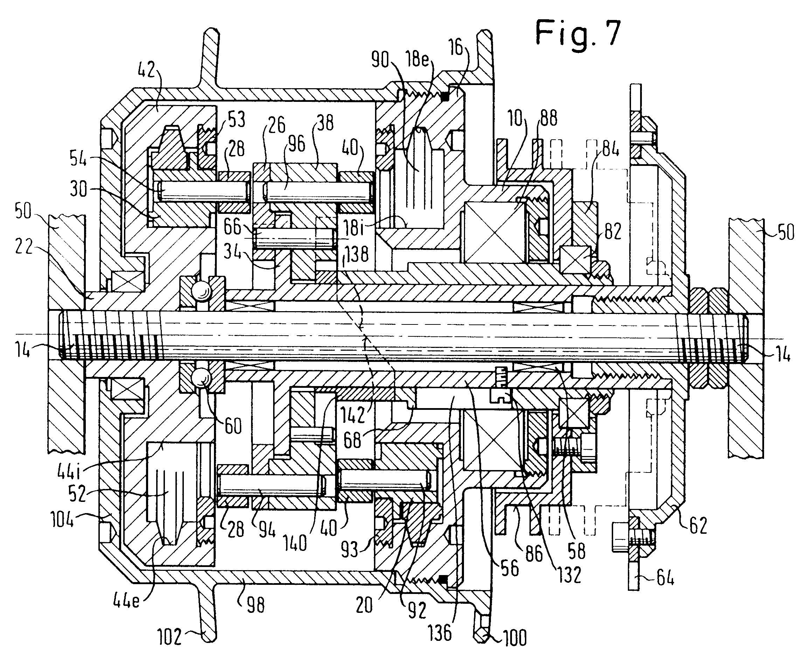

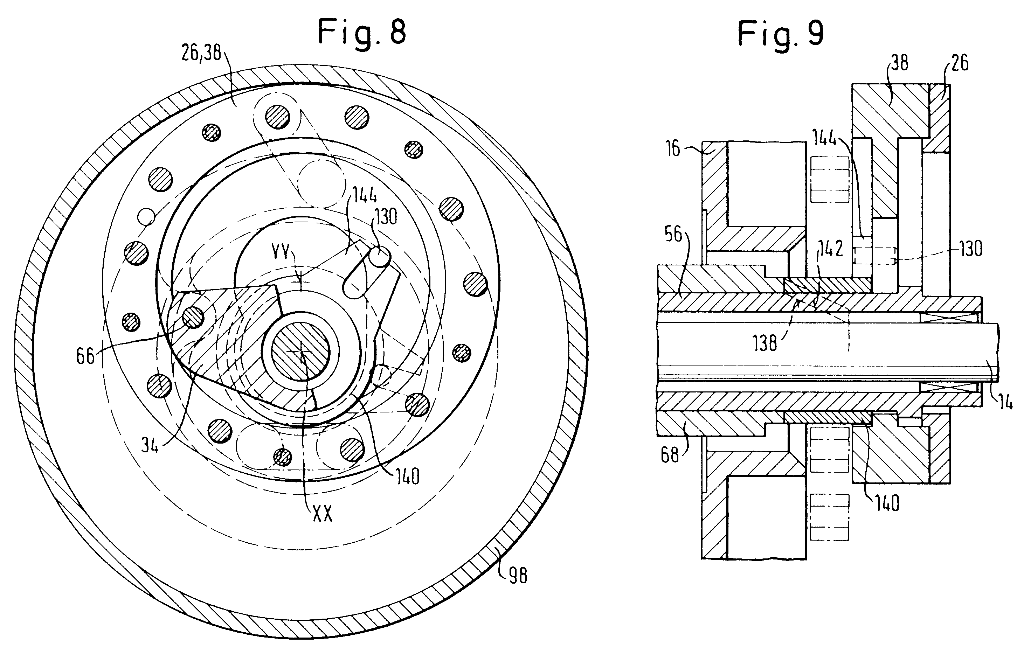

Die zweite Ausführungsform von Fig. 7 bis 9 unterscheidet sich von der den Fig. 3 bis 5 nur durch den Mechanismus zur Steuerung der Exzentrizität e der Innenringe 26, 38.

Bei dieser Ausführungsform tragen die Innenringe 26, 38 einen Bolzen 130, der in einem Abstand von ihrem Zapfen 66 und vorzugsweise auf der anderen Seite ihrer Achse YY angeordnet ist. Die Drehung der axial verschiebbaren Muffe 68 um die Hülse 56 ist positiv durch eine Schraube 132 blockiert, die die Hülse 56 durchquert und in eine Längsaussparung 136 der Muffe 68 hineinragt. Diese besitzt an ihrem dem Halter 34 zugewandten Ende eine schraubenförmige Fläche 138. Ein Steuerring 140 ist auf der Hülse 56 drehbar montiert und ist auf der Seite des Halters 34 mit der Muffe 68 in Flucht. Dieser Steuerring 140 besitzt ebenfalls eine schraubenförmige Fläche 142, die der Fläche 138 der Muffe 68 entspricht und mit dieser in Kontakt ist. Der Steuerring wird ferner in axialer Richtung durch eine Gabel 144 verlängert, die den Bolzen 130 des Halters 34 umgreift. Eine axiale Bewegung der Muffe 68 bewirkt also durch Zusammenwirken der beiden schraubenförmigen Flächen 138 und 142 eine Drehung des Steuerrings 140 um die Achse XX, was wiederum durch Zusammenwirken der Gabel 144 des Steuerrings 140 und des Bolzens 130 der Innenringe 26, 38 eine Drehung dieser Innenringe um ihren Zapfen 66 bewirkt. Der Windungssinn der schraubenförmigen Flächen 138 und 142 ist dabei natürlich so gewählt, daß die Innenringe zur Achse XX koaxial sind, wenn die Muffe 68 ihre erste Stellung einnimmt, in der sie von dem Halter 34 entfernt ist.

Zur Steuerung der Exzentrizität der Innenringe 26, 38 kann natürlich auch jeder andere bekannte Mechanismus verwendet werden.

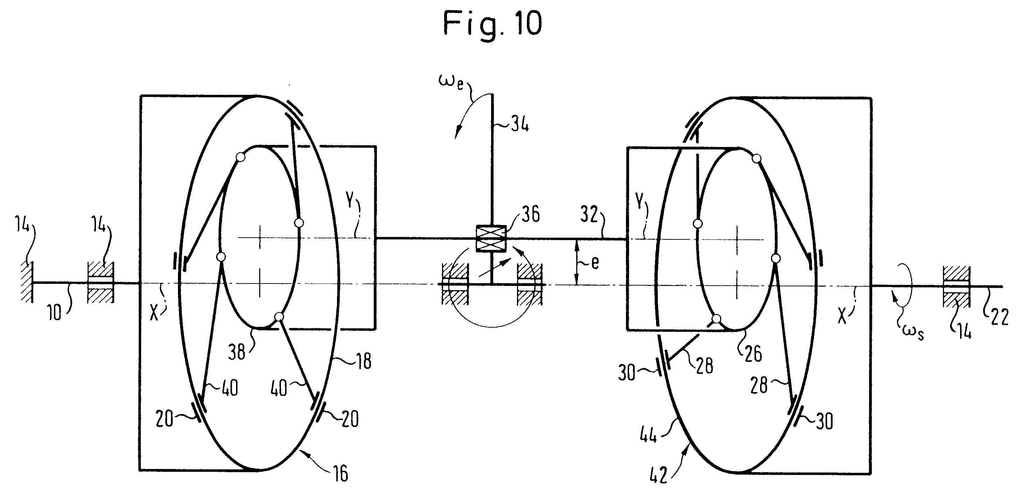

Fig. 10 zeigt eine weitere Abwandlung der Erfindung. Sie hat im wesentlichen denselben Aufbau wie die Ausführungsform von Fig.2 und ihre Bauteile sind mit denselben Bezugszahlen wie in Fig. 2 bezeichnet. Auch hier bildet der Halter 34 der Zwischenwelle 32 der Innenringe 26 und 38 das Eingangsorgan. Die erste Welle 10 ist jedoch am Gestell 14 befestigt, und die zweite Welle 22 bildet das Ausgangsorgan. Wenn man die Bewegungen der Wellen und Ringe von der Welle 10 der Vorrichtung von Fig. 1 aus beschreibt, zeigt sich, daß bei der Vorrichtung von Fig. 10 die Ausgangsdrehung $\omega_s$ der zweiten Welle und die Eingangsdrehung $\omega_e$ des Halters 34 durch die Beziehung:

$$\omega_s = \omega_e \times R' = -\omega^e \times (r-1) \qquad (III)$$

miteinander verknüpft sind, in der r das Übersetzungsverhältnis der Vorrichtung von Fig. 1 ist.

Wenn r größer als 1 ist, ist das Übersetzungsverhältnis R' also negativ, d.h. die Ausgangsdrehung ist der Eingangsdrehung entgegengesetzt. Dies kann bei manchen Anwendungen zweckmäßig sein, bei denen hinter dem Wechselgetriebe eine Übersetzung oder eine Untersetzung vorgenommen werden soll, was mit einer einfachen Zahnradgetriebestufe mit gleichzeitiger Drehrichtungsumkehr erreicht werden kann.

Zweitens zeigt sich, daß der absolute Wert von R' bei üblichen Werten von r zwischen 1 und 3 sich zwischen 0 und 2 ändert, d.h. in einem wesentlich größeren Bereich, der außerdem sowohl Werte kleiner als 1 als auch Werte größer als 1 umfaßt.

Neben den hier beschriebenen Ausführungsformen der Erfindung, die in die Radnabe eines Fahrrads integriert sind, umfaßt die Erfindung natürlich auch Vorrichtungen, die in das Tretlager oder in einen Wellentrieb eines Fahrrads integriert sind. Diese Vorrichtung kann ferner für Fahrräder und für Motorfahrzeuge verwendet werden.

**Patentansprüche**

1. Getriebe mit stufenlos regelbarem Übersetzungsverhältnis, bestehend aus einer ersten um eine Achse XX drehbaren Welle (10), einer zweiten drehbaren Welle (22), die mit der ersten Welle in einer Linie liegt, einem zwischen der ersten Welle (10) und der zweiten Welle (22) angeordneten Halter (34), der ein Organ (26, 38) mit verstellbarer Exzentrizität (e) trägt, mindestens zwei Übertragungsarmen (40), die an dem Organ (26, 38) mit verstellbarer Exzentrizität angelenkt sind und mit der ersten Welle (10) über Gleitelemente (20) mit Einwegsperrung zusammenwirken, und mindestens zwei Übertragungsarmen (28), die an dem Organ (26, 38) mit verstellbarer Exzentrizität angelenkt sind und über Gleitelemente (30) mit Einwegsperrung mit der zweiten Welle (22) zusammenwirken,
dadurch **gekennzeichnet,**
daß der Halter (34) um die Achse (XX) der ersten und der zweiten Welle (10, 22) drehbar montiert ist und ein Eingangsorgan mit der Bewegung ($\omega_e$) bildet, daß eine der beiden Wellen (10, 22) bezüglich Drehung an einem Gestell (14) blockiert ist und daß die andere Welle (22, 10) ein Ausgangsorgan mit der Bewegung ($\omega_s$) bildet.

2. Vorrichtung nach Anspruch 1,
dadurch **gekennzeichnet,**
daß die erste Welle (10) einen Außenring (16) trägt, in dem eine Bahn (18; 18i, 18e) zur Aufnahme der Gleitelemente (20) mit Einwegsperrung vorgesehen ist, und daß die zweite Welle (22) einen Außenring (42) trägt, in dem eine Bahn (44; 44i, 44e) zur Aufnahme der Gleitelemente (30) mit Einwegsperrung vorgesehen ist.

3. Vorrichtung nach Anspruch 2,
dadurch **gekennzeichnet,**
daß das Organ mit verstellbarer Exzentrizität zwei Innenringe (26, 38) aufweist, die aneinander befestigt sind und eine gemeinsame Achse (YY) definieren und an denen die Übertragungsarme (28, 40) angelenkt sind.

4. Vorrichtung nach Anspruch 3,
dadurch **gekennzeichnet,**
daß die Innenringe (26, 38) an dem Halter (34) um einen Zapfen (66) drehbar montiert sind, der zur Achse (XX) der ersten und zweiten Welle (10, 22) parallel ist und in einem Abstand (d) von dieser angeordnet ist.

5. Vorrichtung nach Anspruch 4,
dadurch **gekennzeichnet,**
daß das Gestell (14) eine feststehende Welle aufweist, auf der der Außenring (42) der zweiten Welle (22) befestigt ist und auf der der Halter (34) und die erste Welle (10) drehbar montiert sind.

6. Vorrichtung nach Anspruch 5,
**gekennzeichnet**
durch eine auf dem aus einer Welle bestehenden Gestell (14) axial bewegliche und sich mit dieser drehende Muffe (68) und der Muffe (68), dem Halter (34) und den Innenringen (26, 38) zugeordnete Einrichtungen (70 bis 80; 130 bis 144) zur Umformung der axialen Bewegung der Muffe (68) in eine Drehung der Innenringe (26, 38) um ihren Zapfen (66), wobei diese Einrichtungen vorzugsweise bestehen aus: einem Daumen (72), der an dem dem Halter (34) nahegelegenen Ende der Muffe (68) angelenkt ist und eine Nockenfläche (74) und eine Schubnase (76) aufweist, einer an dem Halter (34) montierten Rolle (78), auf der die Nockenfläche (74) des Daumens (72) aufliegt, und einer an den Innenringen (26, 38) vorgesehenen Auflagefläche (80), an der die Schubnase (76) des Daumens (72) zur Auflage kommt.

7. Vorrichtung nach Anspruch 6,
dadurch **gekennzeichnet,**
daß die Einrichtungen bestehen aus: einer schraubenförmigen Fläche (138), die an dem dem Halter (34) nahegelegenen Ende der Muffe (68) vorgesehen ist, einem neben dem Halter (34) sitzenden Steuerring (140), der mit einer entsprechenden schraubenförmigen Fläche (142) versehen ist und eine gabelförmige axiale Verlängerung (144) besitzt, und einem Bolzen (130), der an den Innenringen (26, 38) befestigt ist und in die gabelförmige Verlängerung (144) eintritt.

8.  Vorrichtung nach einem der Ansprüche 2 bis 7,
    dadurch **gekennzeichnet,**
    daß die Bahnen (18, 44) in Umfangsnuten (52, 90) der Außenringe (16, 42) geformt sind und jeweils aus einer zylindrischen Bahn (18i, 44i) und einer Bahn mit zwei einander entgegengesetzten Kegelstumpfflächen bestehen, wobei insbesondere jedes Gleitelement (20, 30) mit Einwegsperrung besteht aus: einem Sockel (110) mit einer auf der zylindrischen Bahn (18i, 44i) aufliegenden Fläche (112) in Form eines Zylindersegments, einem Schuh (116) mit Flächen (118a, 118b) in Form von Kegelstumpfsegmenten, die an der Bahn (18e, 44e) mit zwei einander entgegengesetzten Kegelstumpfflächen anliegen, und einem zwischen den Sockel (110) und den Schuh (116) eingesetzten Arm (122), und vorzugsweise der Sockel (110) der Gleitelemente (20, 30) mit Einwegsperrung eine Achse (54, 92) zur Anlenkung der Übertragungsarme (28, 40) trägt.

9.  Vorrichtung nach einem der vorhergehenden Ansprüche,
    dadurch **gekennzeichnet,**
    daß die zweite Welle (22) an dem Gestell (14) bezüglich Drehung blockiert ist und daß die erste Welle (10) das Ausgangsorgan bildet.

10. Vorrichtung nach einem der Ansprüche 1 bis 8,
    dadurch **gekennzeichnet,**
    daß die erste Welle (10) an dem Gestell (14) bezüglich Drehung blockiert ist und daß die zweite Welle (22) das Ausgangsorgan bildet.

Fig. 1

EP 0 494 341 A1

Fig. 2

Fig. 3

EP 0 494 341 A1

Fig. 5

Fig. 4

12

# Fig. 6a

# Fig. 6b

Fig. 7

Fig. 9

Fig. 8

# Fig. 10

EP 0 494 341 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-590 010 (GALLOWAY ENGINEERING COMPANY)<br>* das ganze Dokument *<br>--- | 1-5,9,10 | F16H29/06<br>B62M9/08 |
| X | US-A-2 346 752 (G.HALL ET AL.)<br>* Seite 1, Spalte 1, Zeile 42 - Spalte 2, Zeile 50 *<br>* Seite 2, Spalte 2, Zeile 69 - Seite 3, Spalte 1, Zeile 10; Abbildungen *<br>--- | 1-5,8-10 | |
| X | DE-C-249 011 (W. VOLKENING)<br>* Ansprüche; Abbildung 3 *<br>--- | 1,9,10 | |
| D,P,<br>A | EP-A-0 411 190 (LOOK)<br><br>* Zusammenfassung *<br>* Spalte 6, Zeile 17 - Zeile 39; Abbildungen *<br><br>----- | 1-10 | |
| | | | **RECHERCHIERTE SACHGEBIETE (Int. Cl.5)**<br><br>F16H<br>B62M |

Der vorliegende Recherchenbericht wurde für alle Patentansprüche erstellt

| Recherchenort | Abschlußdatum der Recherche | Prüfer |
|---|---|---|
| DEN HAAG | 16 APRIL 1992 | MENDE H. |

EPO FORM 1503 03.82 (P0403)